# EUROPÄISCHE PATENTANMELDUNG

(11) **EP 2 990 675 A1**
(43) Veröffentlichungstag der Anmeldung: **02.03.2016**
(21) Anmeldenummer: 15179637.2
(22) Anmeldetag: 04.08.2015
(51) Int. Cl.: F16C 41/00, F16C 33/44, F16C 33/56

(54) **HERKUNFTSIDENTIFIZIERBARES LAGER**

(30) Priorität: 26.08.2014 DE 102014216882
(71) Anmelder: Aktiebolaget SKF, 415 50 Göteborg (SE)
(72) Erfinder: Krause, Thomas, 97506 Grafenrheinfeld (DE)
(74) Vertreter: Kuhstrebe, Jochen

(57) **Zusammenfassung**

Kunststoffaufweisendes Lagerelement, das zumindest teilweise aus einem Kunststoff oder einer Kunststoffzusammensetzung hergestellt ist, wobei der Kunststoff oder die Kunststoffzusammensetzung Additive, insbesondere Sicherungspartikel, aufweist, die analytisch, insbesondere optisch, detektierbar sind.

## Beschreibung

Vorliegende Erfindung betrifft ein Lagerelement, insbesondere einen Käfig zur Aufnahme von Wälzkörpern eines Lagers und/oder ein Dichtelement eines Lagers und/oder eine Gleitschicht eines Gleitlagers, wobei das Lagerelement zumindest teilweise aus einem Kunststoff oder einer Kunststoffzusammensetzung hergestellt ist.

Bei vielen Produkten, wie beispielsweise Lagern, die auf einem weltweiten Markt verkauft werden, besteht die Gefahr, dass die Produkte aus minderwertigen Materialen nachgebaut und verkauft werden. Dadurch entsteht ein hoher wirtschaftlicher Schaden. Zudem und viel schwerwiegender ist jedoch, dass die Verwendung von minderwertigen Materialien Si-cherheitsrisiken generieren, die insbesondere bei Lagern auch zu einer Gefährdung des Menschen führen können.

Da jedoch die Fälschungen oftmals nur mit zeit- und kostenintensiven Laboranalysen identifiziert werden können, ist ein direkter und schneller Nachweis einer Fälschung vor Ort beim Kunden oder auf Ausstellungen nicht möglich.

Im Stand der Technik wurde dabei bereits versucht, eine höhere Fälschungssicherheit durch Bedrucken oder Eingravieren von Codes auf Lagerteilen zu lösen. Derartige Codes sind jedoch auch für Fälscher sichtbar und können ebenfalls gefälscht werden. Alternativ wurde vorgeschlagen, Bauteile mit Chips zu versehen, auf denen Herstellerinformationen gespeichert und ausgelesen werden können. Derartige Chips sind jedoch sehr teuer und lassen sich oftmals auf kleinen Bauteilen nicht anbringen. Zudem werden derartige Chips, insbesondere bei Lagerelementen aus Kunststoffen, durch die hohen Schmelztemperaturen des Kunststoffs bei der Herstellung zerstört und können zudem mechanische Schwachstellen bei Lageranordnungen darstellen.

Aufgabe vorliegender Erfindung ist es deshalb, ein zumindest teilweise aus Kunststoff gefertigtes Lagerelement bereitzustellen, das fälschungssicher ist und bei dem gefälschte Versionen einfach und schnell identifizierbar sind.

Diese Aufgabe wird durch ein kunststoffaufweisendes Lagerelement gemäß Patentanspruch 1 gelöst.

Erfindungsgemäß wird ein kunststoffaufweisendes Lagerelement bereitgestellt, das zumindest teilweise aus einem Kunststoff oder einer Kunststoffzusammensetzung hergestellt ist. Dabei basiert die Erfindung auf der Idee, dass der Kunststoff oder die Kunststoffzusammensetzung Additive, insbesondere Sicherungspartikel, aufweist, die analytisch, insbesondere optisch, detektierbar sind.

Derartige Additive/Sicherungspartikel können beispielsweise direkt während der Compoundierung des Kunststoffs, also während der Zusammenstellung beim Kunststoffhersteller, oder während der Verarbeitung, d.h. bei einem Ausformen des Lagerelements (z.B. durch Spritzgießen, Extrudieren, Warmumformen, Wickeln), als Additiv, Compound oder Masterbatch zugesetzt werden, welche die originale Lagerkomponenten eindeutig identifizierbar und einem Hersteller zuordenbar machen. Derartige bereits bekannte Sicherungspartikel können einfach mittels analytischer Messmethoden detektiert werden und sind üblicherweise problemlos einem Kunststoffgemisch zuzusetzen. Da diese Sicherungspartikel leicht detektierbar sind, kann das so ausgestattete Lagerelement eindeutig als echt verifiziert werden.

Dabei ist insbesondere vorteilhaft, wenn die Additive chemisch und thermisch stabil sind. Dadurch können sie insbesondere bei den zu erwartenden hohen Kunststoffschmelztemperaturen eingesetzt werden und auch vor dem Umformprozess dem Kunststoff beigemischt werden.

Gemäß einem weiteren vorteilhaften Ausführungsbeispiel umfassen die Additive Pigmente, insbesondere reflektierende Pigmente, die eine besonders einfache optische Erkennung möglich machen. Dabei ist insbesondere vorteilhaft, wenn die additiven reflektierenden Pigmente in einem für das menschliche Auge nicht sichtbaren Wellenspektrum, insbesondere im infraroten und/oder ultravioletten Wellenspektrum reflektieren. Derartige Pigmente haben den zusätzlichen Vorteil, dass sie mit bloßem Auge nicht erkannt werden. Dadurch entsteht eine höhere Fälschungssicherheit, da Produktpiraten derartige gesicherte Produkte nicht von ungesicherten Produkten unterscheiden können.

Weiterhin ist ein Ausführungsbeispiel vorteilhaft, bei dem die additiven Pigmente laserverifizierbare Pigmente umfassen, die mittels Laserlicht einer bestimmten Wellenlänge detektierbar sind. Ähnlich wie die im infraroten und/oder ultravioletten Wellenspektrum reflektierenden Pigmente sind auch diese Pigmente nicht mit bloßem Auge zu erkennen, können aber leicht mit entsprechenden Geräten detektiert werden. Auch dies garantiert eine erhöhte Fälschungssicherheit für die entsprechend ausgebildeten Lagerelemente.

Gemäß einem weiteren vorteilhaften Ausführungsbeispiel sind die Additive mittels eines Lesegeräts detektierbar. Dabei ist besonders bevorzugt, wenn das Lesegerät als Strahlungsdetektor, beispielsweise als Photodiode, ausgebildet ist, die auf Licht entsprechender Wellenlänge reagiert. Dabei kann das Lesegerät zudem eine Strahlungsquelle aufweisen, die Licht mit der Wellenlänge ermittelt, die von dem reflektierenden Partikeln refelektiert wird. Dadurch kann eine einfache Fälschungssicherung bereitgestellt werden, da einem Kunden das Lesegerät zusammen mit den Lagerelementen ausgeliefert werden kann bzw. ein Kunde das Lesegerät bevorraten kann und zugekaufte Lagerelemente direkt und schnell auf ihre Echtheit überprüfen kann.

Gemäß einem weiteren vorteilhaften Ausführungsbeispiel ist der Kunststoff ein Thermoplast und/oder Duroplast und/oder Elastomer bzw. umfasst ein Thermoplast und/oder Duroplast und/oder Elastomer. Da üblicherweise Lagerelemente aus diesen Kunststoffen gefertigt werden, ist es besonders vorteilhaft, wenn die Additive gerade derartige Kunststoffe weder chemisch noch mechanisch noch thermisch beeinflussen, so dass die Produkteigenschaften selbst unbeeinflusst sind.

Besonders bevorzugt ist dabei, einen Käfig zur Aufnahme von Wälzkörpern eines Lagers, ein Dichtelement eines Lagers und/oder eine Gleitschicht eines Gleitlagers aus derartigen Kunststoffen mit fälschungssicheren Additiven zu fertigen.

Insgesamt kann mit dem erfindungsgemäßen Lagerelement ein kostengünstiges fälschungssicheres Lager bereitgestellt werden, dessen Produktmarkierung für Fälscher unsichtbar ist. Weiterhin kann über die analytisch einfache Detektierbarkeit der Additive, insbesondere der optischen Detektierbarkeit, die Echtheit einfach und schnell und ohne großen Prüfaufwand verifiziert werden. Zudem können mit den erfindungsgemäßen Lagerelementen Lager bereitgestellt werden, die eine eindeutige und nicht manipulierbare Identifizierung erlauben. Da die Identifizierung eindeutig ist, können die Analyseergebnisse sogar als Beweis vor Gericht zulässig sein.

## Patentansprüche

1. Kunststoffaufweisendes Lagerelement, das zumindest teilweise aus einem Kunststoff oder einer Kunststoffzusammensetzung hergestellt ist, **dadurch gekennzeichnet, dass** der Kunststoff oder die Kunststoffzusammensetzung Additive, insbesondere Sicherungspartikel, aufweist, die analytisch, insbesondere optisch, detektierbar sind.

2. Lagerelement nach Anspruch 1, wobei die Additive chemisch und thermisch stabil sind.

3. Lagerelement nach Anspruch 1 oder 2, wobei die Additive Pigmente, insbesondere reflektierende Pigmente, umfassen.

4. Lagerelement nach Anspruch 3, wobei die additiven reflektierenden Pigmente in einem für das menschliche Auge nicht sichtbaren Wellenspektrum, insbesondere im infraroten und/oder ultravioletten Wellenspektrum, reflektieren.

5. Lagerelement nach Anspruch 3 oder 4, wobei die additiven Pigmente laserverifizierbare Pigmente umfassen, die mittels Laserlicht einer bestimmten Wellenlänge detektierbar sind.

6. Lagerelement nach einem der vorhergehenden Ansprüche, wobei die Additive mittels eines Lesegeräts, insbesondere eines Strahlungsdetektors, vorzugsweise einer Photodiode, detektierbar sind.

7. Lagerelement nach einem der vorhergehenden Ansprüche, wobei der Kunststoff ein Thermoplast und/oder Duroplast und/oder Elastomer ist, und/oder ein Thermoplast und/oder Duroplast und/oder Elastomer umfasst.

8. Lagerelement nach einem der vorhergehenden Ansprüche, wobei das Lagerelement ein Käfig zur Aufnahme von Wälzkörpern eines Lagers und/oder ein Dichtelement eines Lagers und/oder eine Gleitschicht eines Gleitlagers ist.
